# EUROPÄISCHE PATENTSCHRIFT

(11) **EP 1 818 591 B1**
(45) Veröffentlichungstag und Bekanntmachung des Hinweises auf die Patenterteilung: **06.06.2012**
(21) Anmeldenummer: 06021526.6
(22) Anmeldetag: 13.10.2006
(51) Int. Cl.: F16L 27/11

(54) **Leitungselement mit einem Balg und einem Geflechtsschlauch, der durch ein Ringelement an dem Balg fixiert ist.**
Conduit section with a bellows and a braided hose attached to the bellows by a ring member
Elément de conduite avec soufflet et manchon tressé fixé au soufflet par un élément annulaire

(30) Priorität: 29.10.2005 DE 202005016980 U
(43) Veröffentlichungstag der Anmeldung: 15.08.2007
(73) Patentinhaber: Witzenmann GmbH, 75175 Pforzheim (DE)
(72) Erfinder: Dr. Burkhardt, Carlo, 75331 Grunbach (DE); Corbière, Stéphane, 76227 Karlsruhe (DE); Henry, Justin, 77186 Noisiel (FR); Rösler, René, 76137 Karlsruhe (DE)
(74) Vertreter: Lemcke, Brommer & Partner

(56) Entgegenhaltungen:
- EP-A- 0 234 706

## Beschreibung

Die Erfindung betrifft ein Leitungselement, insbesondere für Abgas- und Abgasrückführleitungen von Verbrennungsmotoren bei Kraftfahrzeugen mit einem flexiblen mit einer schraubengang- oder ringförmigen Wellung versehenen Balg und einem auf der Außenseite des Balgs angeordneten Geflechtsschlauch aus Metalldraht, der an mindestens einer Stelle im Bereich der Wellung zwischen den beiden Enden des Balgs an dem Balg anliegt, wobei der Geflechtsschlauch an dem Balg an der mindestens einen genannten Stelle durch ein zusätzliches Ringelement fixiert ist, und wobei das Ringelement mit dem Geflechtsschlauch verbunden oder an diesem befestigt ist.

Aus der EP 0 903 528 A1 ist ein Leitungselement bekannt, welches koaxial zu einem Balg auf dessen Außenseite einen Geflechtsschlauch aus Metalldraht aufweist, wobei Geflechtsschlauch und Balg an zumindest einer Stelle aneinander reibend anliegen, indem der Innendurchmesser des Geflechtsschlauches im Wesentlichen dem freien Außendurchmesser des Balges entspricht.

Solche Leitungselemente dienen der fluiddichten, insbesondere gasdichten flexiblen Verbindung zweier beidseitig anschließender Leitungen, im bevorzugten Fall der flexiblen Verbindung innerhalb einer Abgasleitung eines Kraftfahrzeugs. Die Leitungselemente haben die Aufgabe, Bewegungen insbesondere des Motors zu erlauben und die Motorschwingungen vom Fahrgastraum abzukoppeln. Der Balg kann dabei je nach erforderlicher Flexibilität ein- oder mehrlagig ausgebildet sein, wobei die einzelnen Lagen aus unterschiedlichen Materialien bestehen können. Der Querschnitt des Leitungselementes ist nicht auf kreisrunde Bauweise beschränkt, sondern kann auch oval ausgebildet sein.

Üblicherweise dient der Außengeflechtsschlauch bei den genannten Leitungselementen dazu, durch die mit ihm eingehende Gewichtsvermehrung das Schwingungsverhalten des Balges und damit des Leitungselementes hinsichtlich akustischer Begleiterscheinungen und der Lebensdauer zu optimieren. Bei dem oben genannten Leitungselement wird der Geflechtsschlauch in Folge einer radialen Querschnittsreduzierung und damit einer in Richtung des Balges wirkenden Vorspannung wenigstens örtlich in reibende Anlage gegen die Wandungen des Balges gebracht.

Ein wesentlicher Nachteil derartig angelegter Geflechtsschläuche besteht in der kurzen Lebensdauer dieser Vorspannung. Da solche Leitungselemente die Aufgabe haben, Schwingungen des Motors vom Fahrgastraum zu entkoppeln, altert der Geflechtsschlauch aufgrund der damit verbundenen hohen Belastungen relativ schnell. Daraus resultiert ein Nachlassen der Vorspannung des Geflechts und der Geflechtsschlauch verändert dadurch das Schwingungsverhalten des Balges negativ.

Aus der EP 0 234 706 A1 ist ein abgestimmt bedämpfter Wellschlauch mit einer Geflechtummantelung bekannt, bei dem radial außen liegende Bänder oder Ringe vorgesehen sind, um das Geflecht reibschlüssig auf dem Wellschlauch zu fixieren. Hierbei ist als nachteilig anzusehen, dass die Bänder/Ringe bei Bewegungen des Wellschlauchs verrutschen können, so dass sich das Dämpfungsverhalten verändert. Alternativ können die Ringe auch in nicht gattungsgemäßer Weise durch eine veränderte Flechtung der Ummantelung selbst ausgebildet sein.

Aufgabe der Erfindung ist es, das Leitungselement der eingangs genannten Art derart weiterzubilden, dass ohne Behinderung der Beweglichkeit des Leitungselementes die Lebensdauer des Geflechtsschlauches und damit auch das Schwingungsverhalten des Balges positiv beeinflusst wird, wobei in einfacher und kostengünstiger Weise eine über die Lebensdauer im Wesentlichen konstante Bedämpfung gewährleistet sein soll.

Diese Aufgabe wird durch ein Leitungselement mit den Merkmalen des Anspruches 1 gelöst. Die Verwendung des zusätzlichen Ringelements bedeutet wesentliche Vorteile im Hinblick auf Montage und Funktion des erfindungsgemäßen Leitungselementes: Die Montage wird dadurch vereinfacht, dass der Geflechtsschlauch nicht vor dem Aufziehen auf den Balg mit entsprechenden umlaufenden Querschnittsreduzierungen, Prägungen etc. versehen werden muss, wie dies bei dem genannten Stand der Technik der Fall ist; statt dessen kann der Geflechtsschlauch in einfacher Weise über den Balg gezogen und an den Balgenden festgelegt werden und anschließend erfolgt dann das radiale Fixieren des Geflechtsschlauchs am Balg an der gewünschten Axialposition durch das zusätzliche Ringelement.

Dieses zusätzliche Ringelement ist - ebenfalls im Unterschied zum Stand der Technik der umlaufenden Querschnittsreduzierungen des Geflechtsschlauches - keinen Alterungseinflüssen unterworfen, da es selbst bei größeren Belastungen allenfalls auf Zug in der um den Balg umlaufenden Materialrichtung belastet wird und hierdurch seine Aufgabe, den Geflechtsschlauch dauerhaft an den Balg anzudrücken und hierdurch den Balg dauerhaft zu bedämpfen, problemlos über einen langen Leistungszeitraum erfüllen kann.

Darüber hinaus kann - sollte das zusätzliche Ringelement doch einmal beschädigt werden - das Ringelement einfach selbst bei einem in die Abgasanlage eingebauten Leitungselement gegen ein neues Ringelement ausgetauscht werden, wohingegen der mit radialen Querschnittsreduzierungen versehene Geflechtsschlauch des Standes der Technik komplett gegen einen neuen Geflechtsschlauch ausgetauscht werden müsste, was grundsätzlich die Demontage der Abgasanlage im Bereich des Leitungselementes zur Folge hätte.

Die dämpfende Wirkung des Geflechtsschlauches kann durch die Wahl des axialen Ortes zur radialen Fixierung den jeweiligen Erfordernissen leicht angepasst werden, so dass auf der einen Seite eine kostengünstige Befestigung und auf der anderen Seite ein funktionales Optimum erzielt werden kann.

Hierbei hat es sich als vorteilhaft erwiesen, dass der Geflechtsschlauch an dem Balg in einem Bereich zwischen einem Viertel und einem Drittel der axialen Länge des Balges an dem Balg befestigt ist. Diese außermittige Position der Befestigung des Geflechtsschlauchs an dem Balg ist hinsichtlich Kostenaufwand und Funktionalität besonders geeignet. Durch die Befestigung erhöht sich ebenfalls die Lebensdauer des anliegenden Geflechtes. Dadurch dass das zusätzliche Ringelement problemlos auch nachträglich an dem Leitungselement festgelegt werden kann, kann theoretisch eine Abstimmung bzw. Verstimmung des Leitungselements selbst im eingebauten Zustand erfolgen, indem man das montierte Ringelement entfernt und an einer anderen Position ein neues Ringelement anbringt.

Ein wesentlicher Vorteil der vorliegenden Erfindung ergibt sich dadurch, dass die Funktion des Ringelements selbst durch einfachste und kostengünstigste Bauteile erfüllt werden kann. Demnach kann das Ringelement aus einem Kabelbinder, einem Draht, einer Schweißverbindung oder einer Feder bestehen, ohne dass dies einen negativen Einfluss auf die Qualität der Festlegung des Geflechtsschlauchs an dem Balg bedeutet. Besonders zweckmäßig ist es, wenn das Ringelement bezogen auf die Umfangsrichtung des Leitungselementes im Wesentlichen unnachgiebig ausgebildet ist, um dadurch zu verhindern, dass der Verbund des Ringelements mit Geflecht und Balg bezogen auf die Axialrichtung aufgehoben wird und das Ringelement aus der vorgegebenen Axialposition herauswandern kann.

Besonders wesentlich ist es, dass das zusätzliche Ringelement nicht nur den Geflechtsschlauch an den Balg andrückt, sondern auch selbst am Geflechtsschlauch insbesondere form-, stoff- oder reibschlüssig fixiert ist, um eine Relativbewegung des Ringelements insbesondere in Axialrichtung gegenüber dem Geflechtsschlauch zu verhindern und somit die Lebensdauer des erfindungsgemäßen Leitungselements nicht zu beeinträchtigen.

Für die Befestigung des genannten Ringelementes auf dem Geflecht können diese nun formschlüssig in das Geflecht eingreifen oder mit diesem verbunden sein. Diese Befestigungsart des Ringelementes auf dem Geflecht bietet insbesondere den Vorteil, dass dieses einfach außen an dem Geflecht befestigt werden kann. Hierbei kann das Ringelement beispielsweise Ausprägungen aufweisen, mit welchen das Ringelement in Zwischenräume des Geflechts eingreift. In einer weiteren Ausgestaltung kann das Ringelement einen oder mehrere Griffe besitzen und auch mit diesen in das Geflecht eingreifen. Bei einer weiteren vorteilhaften Ausgestaltung besitzt das Ringelement Flügel, die in abgeklapptem Zustand ebenfalls in entsprechende Aussparungen des Geflechtes eingreifen und so das Ringelement auf dem Geflecht fixieren.

Das Ringelement kann ebenfalls in einer weiteren Ausführungsform, ein zusätzliches Fixierelement, beispielsweise einen Rödeldraht aufweisen, der das Ringelement auf dem Geflecht festlegt.

Diese Ausgestaltung der formschlüssigen Verbindungen mit dem Geflecht sind insbesondere hinsichtlich der kostengünstigen Befestigung und Herstellung des Ringelementes vorteilhaft.

Ferner ist es ebenfalls zweckmäßig, das Ringelement so auszugestalten, dass es reibschlüssig in das Geflecht eingreift oder an diesem befestigt ist. Der Reibschluss des Ringelementes mit dem Geflecht wird beispielsweise durch ein radiales Einspannen des Geflechts durch das Ringelement erreicht. Dadurch muss nicht das ganze Geflecht mittels Reibung durch Vorspannung an dem Balg anliegen; es reicht die Einspannung an einer bestimmten Stelle. Hierdurch wird dafür gesorgt, dass sich sowohl eine höhere Spannung als auch eine damit verbundene höhere Lebensdauer des anliegenden Geflechtes erreichen lässt.

Eine weitere Ausgestaltung einer reibschlüssigen Verbindung des Ringelementes mit dem Geflecht besteht darin, dass das Ringelement zur Befestigung auf dem Geflecht in das Geflecht selbst eingewoben ist. Durch diese Ausgestaltung ist es insbesondere möglich, die Befestigung des Ringelementes bzw. des Geflechts auf dem Balg so zu gestalten, dass der maximale Außendurchmesser von Balg mit aufliegendem Geflecht und Ringelement dem Außendurchmesser des Geflechts entspricht, das Ringelement demnach nicht radial gegenüber dem Geflecht vorsteht. Zudem ist kein zusätzlich außen auf dem Geflechtsschlauch anliegendes Befestigungselement zur Befestigung des Geflechts auf dem Balg notwendig.

Dadurch werden ebenfalls Probleme hinsichtlich der Lebensdauer, beispielsweise durch unbeabsichtigtes temporäres Anliegen oder Anschlagen des Ringelements an anderen Fahrzeugteilen, verursacht durch Schwingungen des Leitungselementes, vermieden.

Erfindungsgemäß kann das Ringelement auch stoffschlüssig in das Geflecht eingreifen oder an diesem befestigt sein. Hierbei ist das Ringelement zur Befestigung auf dem Geflecht beispielsweise an das Geflecht angeschweißt. Ebenso kann das Ringelement auch entsprechend zur Befestigung auf dem Geflecht an das Geflecht gelötet sein. Diese Befestigungsarten des Ringelementes auf dem Geflecht bieten den Vorteil, dass das Ringelement einen sehr einfachen Aufbau aufweisen kann und die Befestigung ebenfalls relativ schnell und einfach an dem Geflecht zur Fixierung desselben auf dem Balg erfolgen kann.

Was das Ringelement betrifft, so kann sich dieses vorteilhafterweise über den ganzen Umfang des Geflechts erstrecken und einen geschlossenen oder offenen Ring bilden. Ebenso kann es jedoch auch zweckmäßig sein, dass sich das (u. U. segmentierte) Ringelement nur über einen oder mehrere Teilbereiche des Umfangs erstreckt, solange damit gewährleistet ist, dass der Geflechtsschlauch an dem Balg festgelegt wird.

Weitere Merkmale der Erfindung und deren Einzelheiten ergeben sich aus der nachfolgenden Beschreibung von Ausführungsformen, die in der Zeichnung dargestellt sind. In der Zeichnung zeigen:
- Figur 1: die erfindungsgemäße Ausbildung von Ringelementen auf Bälgen mit Geflechtsschläuchen.
- Figur 2: die erfindungsgemäße Ausgestaltung von Befestigungsarten des Ringelementes auf dem Geflecht mit darunter liegendem Balg im Querschnitt.

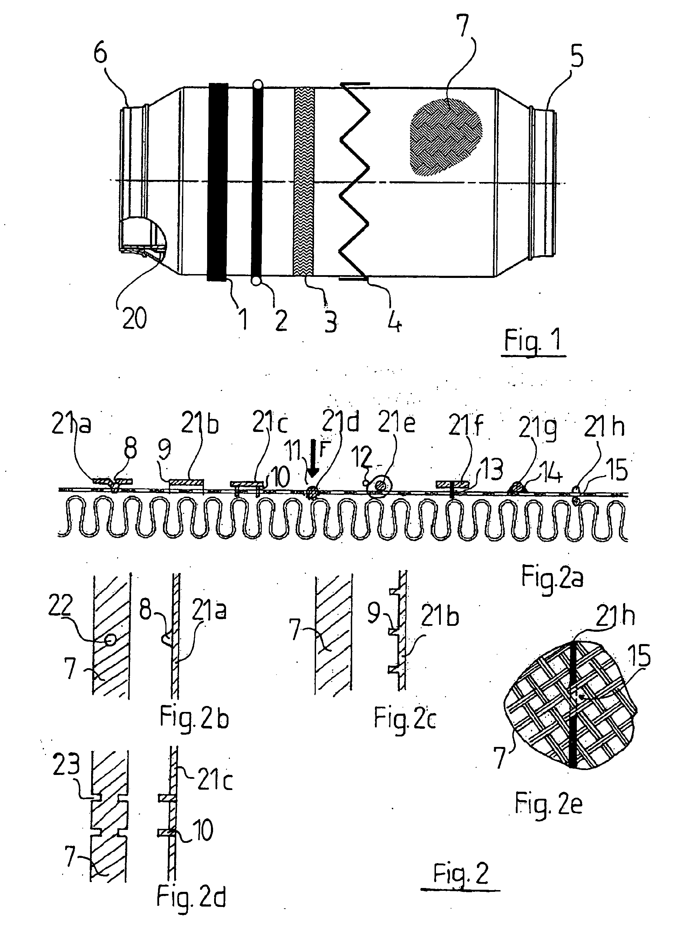

Das Leitungselement gemäß Figur 1 besteht im Wesentlichen aus einem ringgewellten Balg 20 (nur im Ausschnitt zu erkennen) mit entsprechenden Balgwellen und zylindrischen Anschlussenden 5, 6. Auf der radialen Außenseite des Balges befindet sich ein Geflechtsschlauch aus Metalldraht 7, welcher mit vier Ringelementen 1 bis 4, an dem Balg 20 befestigt ist. Diese Ringelemente bestehen aus einem Kabelbinder 1, Draht 2, Schweißverbindung 3 und einer Feder 4 und stellen Beispiele für die Ausgestaltungsmöglichkeiten des erfindungsgemäßen Ringelementes dar.

In Figur 2 sind nun verschiedene Befestigungsarten des Geflechtschlauches eines Ringelementes 21 a bis h am Geflechtsschlauch 7 gezeigt. In einer Ausführungsform weist das Ringelement 21 a Prägungen 8 auf, die in Zwischenräume des Geflechts 7 eingreifen und dieses so auf dem Balg 20 fixieren. Weiterhin kann das Ringelement 21 b auch derart ausgestaltet sein, dass dieses einen oder mehrere Griffe 9 aufweist, die ebenfalls in die Zwischenräume des Geflechtes 7 eingreifen. In einer weiteren Ausgestaltung besitzt das Ringelement 21 c Flügel 10, die im abgeklappten Zustand in Zwischenräume des Geflechtes 7 eingreifen und dieses so auf dem Balg 20 fixieren.

Eine weitere Ausführungsform ist die Befestigung des Ringelementes 21d mittels radialer Einspannung 11 des Geflechtsschlauchs 7 auf dem Balg 20. Hierbei ist es allerdings nicht notwendig, dass das Ringelement an einer bestimmten Position einer Welle des Balgs aufliegt.

Eine weitere Ausführungsform einer reibschlüssigen (und zusätzlich formschlüssigen) Befestigung des Ringelementes ergibt sich durch Einweben 15 des Ringelementes 21 h in das Geflecht 7, siehe Figur 2e.

Figur 2a zeigt außerdem das Ringelement 21e, das durch ein zusätzliches Fixierungselement wie beispielsweise einen Rödeldraht 12 am Geflecht 7 festgelegt ist.

Ausführungsformen einer Befestigung des Ringelementes mit einer stoffschlüssigen Verbindung auf dem Geflecht sind das Anschweißen 13 oder das Anlöten 14 des Ringelementes 21f bzw. 21g an das Geflecht 7.

Figur 2b zeigt im Querschnitt auf der linken Seite das Geflecht 7 mit Aussparungen 22 zur Aufnahme der korrespondierenden Ausprägungen 8 des Ringelementes 21a (Figur 2b rechts).

Figur 2c zeigt auf der rechten Seite das Ringelement 21 b mit mehreren Griffen 9 im Querschnitt, die in das Geflecht 7 auf der linken Seite eingreifen sollen. Figur 2d zeigt auf der linken Seite wiederum das Geflecht 7 mit entsprechenden Aussparungen 23, in die das auf der rechten Seite gezeigte Ringelement 21 c mit abgeklappten Flügeln 10 eingreift.

Zusammenfassend bietet die vorliegende Erfindung den Vorteil, dass durch die radiale Fixierung des Geflechtsschlauches an dem Balg an mindestens einer Stelle im Bereich der Wellung zwischen den beiden axialen Enden des Balges mittels eines Ringelementes eine wesentlich einfachere Befestigung des Geflechtsschlauches auf dem Balg erreicht wird und zudem die Lebensdauer des Geflechtsschlauches bzw. des Leitungselementes erhöht wird. Der Geflechtsschlauch muss somit nicht mehr über die gesamte Länge des Balges mit einer Vorspannung versehen werden, sondern kann einfach mit einer geringeren Vorspannung an einer einzelnen Stelle mit Hilfe des Ringelementes befestigt werden, ohne dass dabei Nachteile hinsichtlich der Dämpfung oder Geräuschreduzierung auftreten.

## Patentansprüche

1. Leitungselement, insbesondere für Abgas- und Abgasrückführleitungen von Verbrennungsmotoren bei Kraftfahrzeugen mit einem flexiblen mit einer schraubengang- oder ringförmigen Wellung versehenen Balg (20) und einem auf der Außenseite des Balgs (20) angeordneten Geflechtsschlauch aus Metalldraht (7), der an mindestens einer Stelle im Bereich der Wellung zwischen den beiden Enden des Balgs (5, 6) an dem Balg (20) anliegt, wobei der Geflechtsschlauch an dem Balg an der mindestens einen genannten Stelle durch ein zusätzliches Ringelement (1, 2, 3, 4, 21a - 21h) fixiert ist, und wobei das Ringelement mit dem Geflechtsschlauch (7) verbunden oder an diesem befestigt ist,
**dadurch gekennzeichnet,**
- **dass** das Ringelement (21a - 21c) formschlüssig in das Geflecht (7) eingreift oder zumindest ein Fixierungselement (12) aufweist, welches Fixierungselement in das Geflecht (7) eingreift und das Ringelement (21 e) am Geflecht (7) festlegt, oder
- **dass** das Ringelement (21f, 21g) stoffschlüssig mit dem Geflecht (7) verbunden ist, oder
- **dass** das Ringelement (21 h) zur reibschlüssigen Befestigung in das Geflecht (7) eingewoben (15) ist.

2. Leitungselement nach Anspruch 1,
**dadurch gekennzeichnet,**
**dass** der Geflechtschlauch (7) an dem Balg (20) in einem Bereich zwischen einem Viertel und einem Drittel der axialen Länge des Balges (20) fixiert ist.

3. Leitungselement nach Anspruch 1,
**dadurch gekennzeichnet,**
**dass** das Ringelement ein Kabelbinder (1), ein Draht (2), eine Schweißverbindung (3) oder eine Feder (4) ist.

4. Leitungselement nach Anspruch 1,
**dadurch gekennzeichnet,**
**dass** das Ringelement (21a) zur Befestigung auf dem Geflecht (7) Ausprägungen (8) aufweist mit welchen das Ringelement (21a) in Zwischenräume des Geflechts eingreift.

5. Leitungselement nach Anspruch 1,
**dadurch gekennzeichnet, dass**
das Ringelement (21 b) zur Befestigung auf dem Geflecht (7) ein oder mehrere Griffe (9) besitzt und mit diesen in die Zwischenräume des Geflechtes (7) eingreift.

6. Leitungselement nach Anspruch 1,
**dadurch gekennzeichnet,**
**dass** das Ringelement (21c) zur Befestigung auf dem Geflecht Flügel (10) besitzt, die im abgeklappten Zustand in das Geflecht (7) eingreifen.

7. Leitungselement nach Anspruch 1,
**dadurch gekennzeichnet,**
**dass** das Ringelement (21f) zur Befestigung auf dem Geflecht (7) an das Geflecht (7) angeschweißt (13) ist.

8. Leitungselement nach Anspruch 1,
**dadurch gekennzeichnet,**
**dass** das Ringelement (21g) zur Befestigung auf dem Geflecht (7) an das Geflecht (7) gelötet (14) ist.

9. Leitungselement nach Anspruch 1,
**dadurch gekennzeichnet,**
**dass** das Ringelement in Umfangsrichtung des Leitungselementes im Wesentlichen unnachgiebig ausgebildet ist.

10. Leitungselement nach Anspruch 1,
**dadurch gekennzeichnet,**
**dass** sich das Ringelement (1 - 4, 21a - 21 h) über den gesamten Umfang des Geflechtsschlauches (7) erstreckt.

11. Leitungselement nach Anspruch 1,
**dadurch gekennzeichnet,**
**dass** sich das Ringelement nur über einen oder mehrere Teilbereiche des Umfangs des Geflechtsschlauchs erstreckt.

## Claims

1. Duct element, especially for exhaust gas ducts and exhaust gas recirculation ducts of internal combustion engines in motor vehicles, having a flexible bellows (20) provided with helical or annular corrugation and having a braided hose made of metal wire (7) which is arranged on the outer side of the bellows (20) and which is in contact with the bellows (20) at at least one location in the region of the corrugation between the two ends of the bellows (5, 6), the braided hose being fixed on the bellows at the at least one said location by an additional ring element (1, 2, 3, 4, 21a-21h), and the ring element being joined to the braided hose (7) or mounted thereon,
**characterised in that**
- the ring element (21 a - 21 c) engages interlockingly in the braid (7) or has at least one fixing element (12), which fixing element engages in the braid (7) and fixes the ring element (21e) in position on the braid (7), or
- the ring element (21f, 21g) is joined to the braid (7) by a material-bonded connection, or
- the ring element (21h) is woven (15) into the braid (7) for frictionally engaged mounting.

2. Duct element according to claim 1,
**characterised in that**
the braided hose (7) is fixed on the bellows (20) in a region between a quarter and a third of the axial length of the bellows (20).

3. Duct element according to claim 1,
**characterised in that**
the ring element is a cable tie (1), a wire (2), a welded join (3) or a spring (4).

4. Duct element according to claim 1,
**characterised in that**
the ring element (21a), for mounting on the braid (7), has protuberances (8) with which the ring element (21 a) engages in gaps in the braid.

5. Duct element according to claim 1,
**characterised in that**
the ring element (21 b), for mounting on the braid (7), has one or more claws (9) with which it engages in the gaps in the braid (7).

6. Duct element according to claim 1,
**characterised in that**
the ring element (21 c), for mounting on the braid, has fins (10) which in the unfolded state engage in the braid (7).

7. Duct element according to claim 1,
**characterised in that**
the ring element (21f), for mounting on the braid (7), is welded (13) to the braid (7).

8. Duct element according to claim 1,
**characterised in that**
the ring element (21g), for mounting on the braid (7), is soldered (14) to the braid (7).

9. Duct element according to claim 1,
**characterised in that**
the ring element is substantially inflexible in the circumferential direction of the duct element.

10. Duct element according to claim 1,
**characterised in that**
the ring element (1 - 4, 21a - 21h) extends around the entire circumference of the braided hose (7).

11. Duct element according to claim 1,
**characterised in that**
the ring element extends around only one or more sub-regions of the circumference of the braided hose.

## Revendications

1. Elément de conduite, en particulier pour des conduites de gaz d'échappement et de recyclage des gaz d'échappement de moteurs à combustion sur des véhicules automobiles, avec un soufflet (20) flexible pourvu d'une ondulation en forme de pas de vis ou annulaire et avec une gaine tressée en fil métallique (7) disposée sur le côté extérieur du soufflet (20), laquelle est en contact avec le soufflet (20) à au moins un point dans la zone de l'ondulation comprise entre les deux extrémités du soufflet (5, 6), la gaine tressée étant fixée au soufflet audit au moins un point par un élément annulaire supplémentaire (1, 2, 3, 4, 21a - 21h) et l'élément annulaire étant relié ou fixé à la gaine tressée (7),
**caractérisé en ce**
- **que** l'élément annulaire (21a - 21c) s'engage dans la tresse (7) par complémentarité de formes ou au moins présente un élément de fixation (12), lequel élément de fixation (12) s'engage dans la tresse (7) et fixe l'élément annulaire (21e) à la tresse (7), ou
- **que** l'élément annulaire (21f, 21g) est relié à la tresse (7) par liaison de matière, ou
- **que** l'élément annulaire (21h) est tissé (15) dans la tresse (7) pour la fixation par adhérence.

2. Elément de conduite selon la revendication 1,
**caractérisé en ce**
**que** la gaine tressée (7) est fixée au soufflet (20) dans une zone comprise entre un quart et un tiers de la longueur axiale du soufflet (20).

3. Elément de conduite selon la revendication 1,
**caractérisé en ce**
**que** l'élément annulaire est un serre-câble (1), un fil métallique (2), une soudure (3) ou un ressort (4).

4. Elément de conduite selon la revendication 1,
**caractérisé en ce**
**que** pour la fixation sur la tresse (7), l'élément annulaire (21a) présente des reliefs (8) avec lesquels l'élément annulaire (21a) s'engage dans des interstices de la tresse.

5. Elément de conduite selon la revendication 1,
**caractérisé en ce**
**que** pour la fixation sur la tresse (7), l'élément annulaire (21b) possède une ou plusieurs prises (9) et s'engage avec celles-ci dans des interstices de la tresse (7).

6. Elément de conduite selon la revendication 1,
**caractérisé en ce**
**que** pour la fixation sur la tresse, l'élément annulaire (21c) possède des ailettes (10) qui, dans l'état rabattu, s'engagent dans la tresse (7).

7. Elément de conduite selon la revendication 1,
**caractérisé en ce**
pour la fixation sur la tresse (7), l'élément annulaire (21f) est soudé (13) à la tresse (7).

8. Elément de conduite selon la revendication 1,
**caractérisé en ce**
pour la fixation sur la tresse (7), l'élément annulaire (21g) est brasé (14) sur la tresse (7).

9. Elément de conduite selon la revendication 1,
**caractérisé en ce**
**que** l'élément annulaire est conçu essentiellement rigide en direction circonférentielle de l'élément de conduite.

10. Elément de conduite selon la revendication 1,
**caractérisé en ce**
**que** l'élément annulaire (1 - 4, 21a - 21 h) s'étend sur toute la circonférence de la gaine tressée (7).

11. Elément de conduite selon la revendication 1,
**caractérisé en ce**
**que** l'élément annulaire s'étend seulement sur une ou plusieurs zones partielles de la circonférence de la gaine tressée.
